# EUROPEAN PATENT APPLICATION

(11) **EP 0 978 228 A1**
(43) Date of publication of application: **09.02.2000**
(21) Application number: 99202530.4
(22) Date of filing: 02.08.1999
(51) Int. Cl.: A01D 78/10

(54) **An implement for displacing crop lying on the soil**

(30) Priority: 03.08.1998 NL 1009789
(71) Applicant: MAASLAND N.V., 3155 PD Maasland (NL)
(72) Inventor: van der Lely, Alexander, 3065 NA Rotterdam (NL); van der Lely, Olaf, 6300 Zug (CH); van den Engel, Alfonsus Jacobus, 3123 CM Schiedam (NL)
(74) Representative: Corten, Maurice Jean F.M.

(57) **Abstract**

The invention relates to an implement for displacing crop lying on the soil, comprising two groups of rake members, of which the first group is located in front of the second group, and the first group supplies the crop to the second group, while the rake members of the two groups operate in a different manner.

## Description

The invention relates to an implement for displacing crop lying on the soil, comprising two groups of rake members, of which the first group is located in front of the second group, and the first group supplies the crop to the second group.

It is known to fit such machines with groups of rake members operating according to the same principle of raking. As an example can be mentioned rake members which are driven about vertical shafts, said rake members comprising arms provided with tines, as described in European patent application 0 819 372.

Such machines have the disadvantage of being expensive. The invention aims at obviating this drawback of a machine comprising groups of rake members.

According to the invention, to that end the principle of raking for displacing crop lying on the soil is different for the two groups.

In accordance with an advantageous embodiment of the invention, the rake members of the first group displace the crop predominantly in a direction perpendicular to the direction of travel, and the rake members of the second group predominantly deposit the crop into a swath.

Such a rake member is described for example in the French patent 1.432.154 and all the details thereof are considered to be included in this application. According to an inventive feature, the rake members of the first group are designed as side rake members. According to a further inventive feature the rake members of the first group are designed as belt-type rake members.

In accordance with another inventive feature, the belt-type side rake members are provided in their operative condition with a belt moving about one or more imaginary axes of rotation. According to again another inventive feature, the belt-type rake members are provided with outwardly projecting tines. According to a further aspect of the invention, in their operative condition, the tines of the belt-type rake member describe a cyclic path, while displacing the crop during part of said path.

According to an inventive feature, the rake members of the second group are driven by shafts extending substantially upwardly.

According to a further inventive feature, the rake members of the second group comprise arms that are provided with tines extending downwardly. According to another inventive feature, the rake members of the second group comprise at least 8 arms provided with tines.

In accordance with another inventive feature, the combination of groups of rake members deposits the crop predominantly in a path orientated in the direction of travel of the implement, which path is situated near the middle of the implement.

According to a further inventive feature, the groups of rake members predominantly deposit the crop in paths situated near the tangents on the outer lateral sides of the second group of rake members, said tangents extending in the direction of travel of the implement.

According to another inventive feature, all the rake members are driven by means of a drive shaft which is situated in a vertical plane orientated in the direction of travel of the implement, which plane is situated near the middle of the implement.

According to a further inventive feature, each of the rake members of the first group has a drive shaft extending from the rake member to a vertical plane orientated in the direction of travel of the implement, which plane is situated near the middle of the implement.

In accordance with another aspect of the invention, the rake members of the second group pivot from the working position into a transport position about a shaft orientated predominantly in the direction of travel of the implement. According to a further aspect of the invention, one or more of the rake members are pivotable from the working position into a transport position about a shaft extending perpendicular to the direction of travel.

According to a further inventive feature, the rake members are provided with running wheels.

In accordance with again a further inventive feature, the implement comprises a first frame beam extending in the direction of travel of the implement in a vertical plane situated near the middle of the implement.

According to another inventive feature, the first frame beam is provided with one or more second frame beams fitted with rake members and extending in a vertical plane perpendicular to the direction of travel.

According to a further inventive feature, the first frame beam is provided with running wheels.

The invention will be explained in further detail on the basis of two exemplary embodiments.
Figure 1 is a plan view of an implement in which the crop is deposited into a swath orientated in the direction of travel of the implement, said swath being located in the middle of the implement, and
Figure 2 is a plan view of an implement in which the crop is deposited in the form of two swaths located on the outer lateral sides of the second group of rake members.

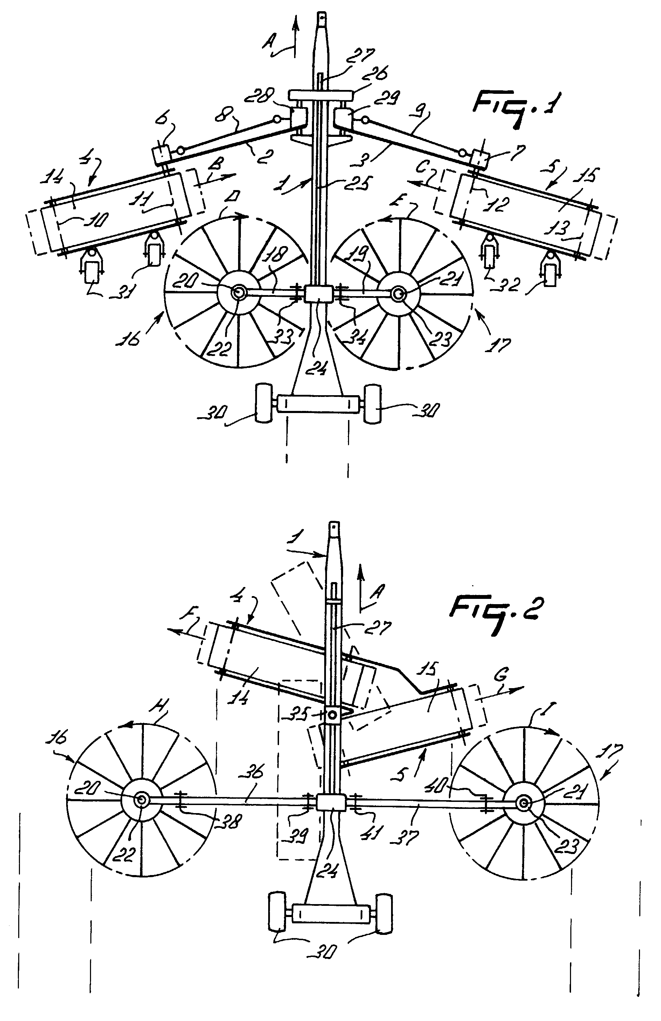

The implement shown in Figure 1 comprises a first frame beam 1 extending in the direction of travel A of the implement. This first frame beam 1 can be coupled to a tractor in a manner known per se, the arrangement being preferably such that the implement is capable of pivoting relative to the tractor about an upwardly orientated shaft during operation.

The first frame beam 1 is provided with two second frame beams 2 and 3 extending to the left and the rights and to which a first group of rake members 4, 5, respectively is fastened.

These rake members 4, 5 are side rake members which are capable of displacing the crop in the direction of the first frame beam 1, as indicated by the arrows B and C.

On the sides facing the first frame beam 1 the rake members 4 and 5 comprise transmission boxes 6, 7, respectively. These transmission boxes 6, 7 are connected, by means of intermediate shafts 8, 9, respectively, to the gearboxes 28 and 29 which are driven by means of a transmission box 26 disposed on the first frame beam 1.

The rake members 4 and 5 have horizontal shafts 10 and 11, 12 and 13, respectively, serving as rotary shafts for flexible tine carriers 14, 15, respectively.

Behind the first group of side rake members 4 and 5 a second group of rake members 16, 17, respectively is disposed on outwardly extending frame beams 18, 19, respectively. This second group of rake members 16, 17 operates according to a principle of raking that differs from the first group of rake members 4, 5.

The rake members 16 and 17 preferably comprise at least eight outwardly projecting arms provided with downwardly orientated tines and are driven mechanically about upwardly orientated shafts 20 and 21. To that end these rake members comprise at their upper side gearboxes 22, 23, respectively. The drive of these gearboxes takes place by intermediate shafts accommodated in the second frame beams 18 and 19. The second frame beams 18 and 19 are fastened to the first frame beam 1, which first frame beam 1 carries a gearbox 24 to which the drive shafts of the gearboxes 22 and 23 are connected.

The transmission in the gearbox 24 takes place by means of a drive shaft 25 extending in the direction of travel A. This drive shaft is connected to a central transmission box 26 which can be coupled itself, via a drive shaft 27, with the power take-off shaft of the tractor. The intermediate shafts 8, 9, respectively are connected to gearboxes 28, 29, respectively which are coupled themselves with the transmission box 26.

The drive is such that, near the soil, the tine carriers 14, 15, respectively move to the right, to the left, respectively, so that the crop is displaced to the right, to the left, respectively, according to the arrows B, C, respectively.

The crop is supplied by the first group of rake members 4, 5 before the second group of rake members 16, 17, the latter conveying the crop towards the centre of the implement, so that a large, uniformly shaped swath is obtained, which swath is located in a vertical plane orientated in the direction of travel, near the middle of the implement. To that end the rake members 16 and 17 rotate according to the arrows D, E, respectively. The crop is preferably conveyed by the first group of rake members 4 and 5 to near the middle of the front side of the rake members 16, 17, respectively. Consequently there is preferably a considerable overlap between the rake members of the first group of rake members 4 and 5 and between the rake members 16, 17, respectively, located therebehind and belonging to the second group.

The implement is supported by running wheels 30 which are fastened to the first frame beam 1.

The rake members 4 and 5 of the first group are also supported by running wheels 31, 32, respectively, which are designed as castor wheels. If desired, the rake members 16 and 17 can also be supported by running wheels.

The rake members 16 and 17 can be pivoted upwardly about shafts 33, 34, respectively, accommodated in the frame beams 18, 19, respectively, in order to be brought into the transport position.

The implement shown in Figure 2 also comprises two groups of rake members operating according to a different principle of raking, just like the two groups of rake members in Figure 1. However, the rake members are positioned in such a manner that two swaths are formed on the outer lateral sides of the implement. Consequently, parts corresponding to those of Figure 1 are indicated by the same reference numerals.

The implement according to Figure 2 comprises two groups of rake members, i.e. a first group including the rake members 4 and 5, and a second group including the rake members 16 and 17.

The rake members 4 and 5, designed as side rake members, displace the crop according to the arrows F and G in such a manner that the crop is conveyed to the outer lateral sides of the implement.

Also in this situation the crop is supplied by the first group of rake members 4 and 5 to the second group of rake members 16 and 17, but the latter rake members also move in an other direction than the corresponding second group of rake members of Figure 1, viz. the rake member 16 moves anticlockwise (arrow H), and the rake member 17 moves clockwise (arrow I).

It is further noticed that the arrows F and G preferably enclose a forwardly diverging angle with each other, while the arrows B and C of Figure 1 preferably enclose a forwardly converging angle. The drive of the first group of rake members 4 and 5 takes place via a gearbox 35 disposed on the first frame beam 1 and located, viewed from above, between the two rake members 4 and 5.

The rake members 16 and 17, which are rotatable about upwardly orientated shafts 20, 21, respectively, are driven via gearboxes 22, 23, respectively, by means of intermediate shafts located in the second frame beams 36, 37, respectively, extending from the first frame beam 1 to the left and to the right. These intermediate shafts are connected to a gearbox 24 disposed on the first frame beam, which gearbox 24 is connected to the drive shaft 27.

The second frame beams 36, 37, respectively each have two pivot shafts 38, 39, respectively and 40, 41, respectively. These pivot shafts extend in the direction of travel A. Via the pivot shafts 39 and 41, the second frame beams 36, 37, respectively can first be pivoted upwardly, for obtaining a transport position, whereupon the rake members 16, 17, respectively can be pivoted downwardly about the pivot shafts 38, 40, respectively.

The rake members 4 and 5 can be pivoted about a non-shown upwardly orientated shaft, in such a manner that the rake member 4, viewed from above, still encloses a small angle with the first frame beam 1. The rake member 5 is also pivoted about an upwardly orientated shaft so that, in plan view, said rake member also encloses a small angle with the first frame beam 1. This transport position is shown in Figure 2 by dashed lines. Also in this embodiment the first frame beam 1 is provided with running wheels 30.

The implement operates as follows.

The rake members 4 and 5, of which the strips of soil to be worked overlap each other seen in the direction of travel A, rake the crop to the left, to the right, respectively. This crop will be placed in the form of a swath before the rake members 16 and 17. The rake member 16 deposits all the crop lying before said rake member 16 to the left; this means that the crop displaced by the rake member 4 and the crop lying on the soil before the rake member is deposited as a whole to the left, so that on the left side of the rake member 16 there will be placed a large swath extending in the direction of travel A of the implement.

In an identical manner the crop being displaced on the right side of the implement by the rake member 5 is joined together with the crop deposited by the rake member 17 into a large swath.

At the end of the field the implement can be turned so as to drive back parallel to the first working pass. In this situation the swath being formed on one side of the implement can be deposited next to an already formed swath, so that the size of the swath is doubled.

This implement has the advantages that the side rake members deposit the crop loosely over a great width before the rotating rake members, the latter ensuring, for their part, that the swath is properly formed and the soil is free from crop after raking.

Although in the exemplary embodiments the side rake members have tine carriers 14 and 15 extending about horizontal shafts, which embodiment is preferred, it is also possible for the tine carriers to extend about two upwardly orientated shafts.

## Claims

1. An implement for displacing crop lying on the soil, comprising two groups of rake members, of which the first group is located in front of the second group, and the first group supplies the crop to the second group, characterized in that the principle of raking for displacing crop lying on the soil is different for the two groups.

2. An implement as claimed in claim 1, characterized in that the rake members (4, 5) of the first group displace the crop predominantly in a direction perpendicular to the direction of travel, and the rake members (16, 17) of the second group predominantly deposit the crop into a swath.

3. An implement as claimed in any one of the preceding claims, characterized in that the rake members (4, 5) of the first group are designed as side rake members.

4. An implement as claimed in claim 2 or 3, characterized in that the rake members (4, 5) of the first group are designed as belt-type rake members.

5. An implement as claimed in claim 4, characterized in that the belt-type rake members are provided with a belt moving during operation about one or more imaginary axes of rotation.

6. An implement as claimed in any one of claims 4 or 5, characterized in that the belt-type rake members are provided with outwardly projecting tines.

7. An implement as claimed in any one of claims 4,5 or 6, characterized in that, in their operative condition, the tines of the belt-type rake member describe a cyclic path, while displacing the crop during part of said path.

8. An implement as claimed in any one of the preceding claims, characterized in that the rake members (16, 17) of the second group are driven by shafts (20, 21) extending substantially upwardly.

9. An implement as claimed in claim 8, characterized in that the rake members of the second group comprise arms that are provided with tines extending downwardly.

10. An implement as claimed in claim 9, characterized in that the rake members of the second group comprise at least 8 arms provided with tines.

11. An implement as claimed in any one of the preceding claims, characterized in that the combination of groups of rake members deposits the crop predominantly in a path orientated in the direction of travel of the implement, which path is situated near the middle of the implement.

12. An implement as claimed in any one of claims 1 - 10, characterized in that the groups of rake members predominantly deposit the crop in paths situated near the tangents on the outer lateral sides of the second group of rake members (16, 17), said tangents extending in the direction of travel of the implement.

13. An implement as claimed in any one of the preceding claims, characterized in that all the rake members are driven by means of a drive shaft (27) which is situated in a vertical plane orientated in the direction of travel of the implement, which plane is situated near the middle of the implement.

14. An implement as claimed in one or more of claims 4 - 7, or one or more of claims 11 - 13, characterized in that each of the rake members of the first group has a drive shaft (8, 9) extending from the rake member to a vertical plane orientated in the direction of travel of the implement, which plane is situated near the middle of the implement.

15. An implement as claimed in any one of the preceding claims, characterized in that the rake members of the second group pivot from the working position into a transport position by means of a shaft (38, 39, 40, 41) extending predominantly in the direction of travel of the implement.

16. An implement as claimed in any one of claims 1 - 14, characterized in that one or more of the rake members are pivotable from the working position into a transport position about a shaft extending perpendicular to the direction of travel.

17. An implement as claimed in any one of the preceding claims, characterized in that the rake members are provided with running wheels.

18. An implement as claimed in any one of the preceding claims, characterized in that the implement comprises a first frame beam (1) extending in the direction of travel of the implement in a vertical plane situated near the middle of the implement.

19. An implement as claimed in any one of the preceding claims, characterized in that the first frame beam is provided with one or more second frame beams (18, 19) fitted with rake members, said frame beams extending in a vertical plane perpendicular to the direction of travel.

20. An implement as claimed in any one of the preceding claims, characterized in that the first frame beam (1) is provided with running wheels (30).
